# EUROPEAN PATENT APPLICATION

(11) **EP 2 846 253 A1**
(43) Date of publication of application: **11.03.2015**
(21) Application number: 13183187.7
(22) Date of filing: 05.09.2013
(51) Int. Cl.: G06F 3/14, B60K 35/00, B60K 37/02, G06F 3/147, G09G 5/00, G09G 5/14

(54) **Operation of a control device with a separated display device in a vehicle**

(71) Applicant: Continental Automotive GmbH, 30165 Hannover (DE)
(72) Inventor: Linhos, Dirk, 35633 Lahnau (DE)

(57) **Abstract**

A method for operating a control device (12) with a separated display device (14) of a vehicle (10) is proposed. The method comprises generating graphics data in the control device (12), partitioning the graphics data into data packages, transmitting the data packages from the control device (12) to the display device 16 via a packet switched bus (14), assembling the data packages in the display device (16) into the graphics data, and updating a display buffer (22) of the display device (16) by replacing at least a part of the display buffer (22) with the graphics data.

## Description

### Field of the invention

The invention relates to a method, a computer program and a computer-readable medium for operating a control device with a separated display device of a vehicle.

### Background of the invention

An automotive system with a human machine interface, which may be used in a vehicle, may have to be connected via an electrical bus to a separate detached front device, such as for instance a display, hard keys, or rotaries, due to a design of the vehicle or a limited space in a vehicle's dashboard. For instance graphics data displayed in a front display may be generated in a control device of the human machine interface in order to require a low performance of the detached front device in terms of e.g. CPU and memory. As a result, the graphics data may be transmitted via the electrical bus to the detached front device, which in turn may require a certain bandwidth of the bus. Therefore, the detached front device is usually connected to the control device by a separate bus dedicated to transmit graphics data, such as e.g. an LVDS bus.

### Summary of the invention

It is an object of the invention to provide a method for displaying graphics data in a display device of a vehicle at low cost, while fulfilling automotive requirements.

This object is achieved by the subject-matter of the independent claims. Further exemplary embodiments are evident from the dependant claims and from the following description.

An aspect of the invention relates to a method for operating a control device with a separated display device of a vehicle.

According to an embodiment of the invention, the method comprises generating graphics data in the control device, partitioning the graphics data into data packages, transmitting the data packages from the control device to the display device via a packet switched bus, assembling the data packages in the display device into the graphics data, and updating a display buffer of the display device by replacing at least a part of the display buffer with the graphics data.

The graphics data generated in the control device may for instance comprise a fuel gauge, a mileage gauge, or any other information which may be brought to an intention of a driver of the vehicle. In order to generate and process the graphics data, the control device may comprise amongst other components a CPU and a memory.

The term "packet switched" bus in this context may mean that only data packages may be transmitted by the bus in contrast to e.g. a continuous data transmission in other bus systems. Therefore, graphics data generated in the control device may be divided or partitioned by the control device into data packages which may be transmitted via the packet-switched bus to the display device. In the display device these data packages may for instance be assembled by storing consecutive data packages in a memory.

According to an embodiment of the invention, the packet switched bus is a CAN bus, a MOST bus, a FlexRay bus or an Ethernet bus. For instance a CAN bus may usually be employed in vehicles to connect various control devices and it may be used as command and control channel for e.g. button/rotary input events, diagnostics, illumination, or monitoring of certain parameters. Apart from that, a CAN bus may fulfill automotive requirements, for instance in terms of a stability of a data transmission. Thus, by using the CAN bus for transmitting graphics data to the display device, hardware costs may be saved while ensuring a reliable transmission of graphics data. In particular, the packet switched bus may be the only data communication connection between the control device and the display device.

According to an embodiment of the invention, the method for operating the control device with the separated display device further comprises: in the control device, determining and generating at least one changed region in a next display image with respect to an actual display image, transmitting the changed region as graphics data in packages to the display device, and replacing the changed region in the display buffer of the display device.

Because the changed region, i.e. a changed frame content, of the next display image is determined and generated in the control device, a comparably low performance of the display device may be required in terms of e.g. CPU and memory. Hence, costs for the display device may be saved.

Furthermore, by transmitting only the changed region to the display device, data traffic in the bus required for a single display image may be reduced. Consequently, a number of frames per second transmitted via the bus may be increased, and also display images for large-sized displays may be transmitted without further expenses for additional hardware, such as e.g. a high-speed and high-bandwidth bus.

Such method may be efficient especially for displays showing a graphical user interface (GUI), because at GUIs typically only a small region like a text box, a check box state, or a scroll bar state may change.

According to an embodiment of the invention, more than one changed region is transmitted to the display device, before the changed regions are replaced in the display buffer. In other words, for each display frame a plurality of changed regions may be transmitted to the display device and the display buffer may be updated with the plurality of changed regions.

According to an embodiment of the invention, the changed regions are rectangular regions and the method for operating the control device with the separated display device further comprises transmitting an offset, a width and a height of the rectangular region to the display device. Therein, the offset may be given for instance as offset in two perpendicular directions in a Cartesian coordinate system of a display image, such as e.g. an offset in x-direction and an offset in y-direction.

Using rectangular regions for changed frame content, such as e.g. changed digits in a fuel gauge, and providing values for an offset, a width and a height of the respective changed rectangular regions may simplify replacing only the changed regions in the display buffer. This may for example be accomplished by finding a position of a changed rectangular region based on the values for the offset, the width and the height, wherein the position may be given e.g. as a pair of coordinates in a Cartesian coordinate system of the display image. Starting from this position a rectangular region in a current display image may be replaced, e.g. bit by bit, with the changed rectangular region of the next display image.

According to an embodiment of the invention, the method for operating the control device with the separated display device further comprises: transmitting a graphics format for the graphics data to the display device, the graphics format indicating the numbers of bits used per pixel, such as e.g. 1 bit per pixel or 2 bits per pixel.

Such protocol may define certain flexibility to configure the graphic format and also to control the individual display controller commands at the control device. This may keep the need of software updates at the display device small.

According to an embodiment of the invention, the graphics data is generated in a storage format of the display buffer, wherein data packages are generated by partitioning the graphics data in the storage format without further processing, and wherein the assembled graphics data is directly written in the display buffer without further processing. This may mean that the graphics data may be generated in the control device and transmitted to the display device in an uncompressed manner such that the assembled graphics data may be directly displayed e.g. by a display driver, which may be adapted to display a content of the display buffer. With this approach, hardware costs may be saved since the display device may not require a high performance in terms of e.g. a CPU, which would be necessary in case the graphics data would have to be further processed by the display device, such as e.g. uncompressed and/or rendered.

According to an embodiment of the invention, a first checksum for the graphics data may be calculated by the control device and transmitted to the display device. Furthermore, a second checksum for the assembled graphical data may be calculated in the display device, and the display buffer may only be updated, if the first checksum equals the second checksum. This may ensure a correct transmission of the graphics data via the packet switched bus, and it may further ensure a correct assembly of the data packages in the display device. According to an embodiment of the invention, a value of a number of frames per second to be displayed may be transmitted by the control device to the display device. Apart from that, a trigger signal may be transmitted to the display device during a start-up process, which trigger signal may serve to turn on the display and/or an illumination of the display (e.g. before a first image may be displayed).

Because of lifesign signals and a hierarchical protocol definition, the control device and display device are able to resynchronize for all kind of transmission problem as well as for disconnecting the bus for a certain time.

According to an embodiment of the invention, the display device is detachable from a console of the vehicle and the display device comprises a plug for interconnecting the display device to the packet switched bus. The console may for instance be a dashboard of the vehicle, in which the display device may be integrated.

An aspect of the invention relates to computer program for operating a control device of a vehicle, which, when being executed by a processor, is adapted to carry out the method as described in the above and in the following.

Another aspect of the invention relates to a computer-readable medium, in which such computer program for operating the control device with separated display device is stored. A non-volatile computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer-readable medium may also be a data communication network, e.g. the Internet, which allows downloading a program code Yet another aspect of the invention relates to a vehicle with a control device, a packet switched bus and a display device, which are adapted to carry out the method as described in the above and in the following.

These and other aspects of the invention will be apparent from and elucidated with reference to the embodiments described hereinafter.

### Brief description of the drawings

Below, embodiments of the present invention are described in more detail with reference to the attached drawings.
Fig. 1 schematically shows a vehicle with a control device, a packet switched bus and a display device according to an embodiment of the invention.
Fig. 2 shows a flow chart schematically illustrating steps of a method for operating the control device with the display device of Fig. 1 according to an embodiment of the invention.
Fig. 3 shows a flow chart illustrating steps of a method for operating the control device with the display device of Fig. 1 according to another embodiment of the invention.

In principle, identical parts are provided with the same reference symbols in the figures.

### Detailed description of exemplary embodiments

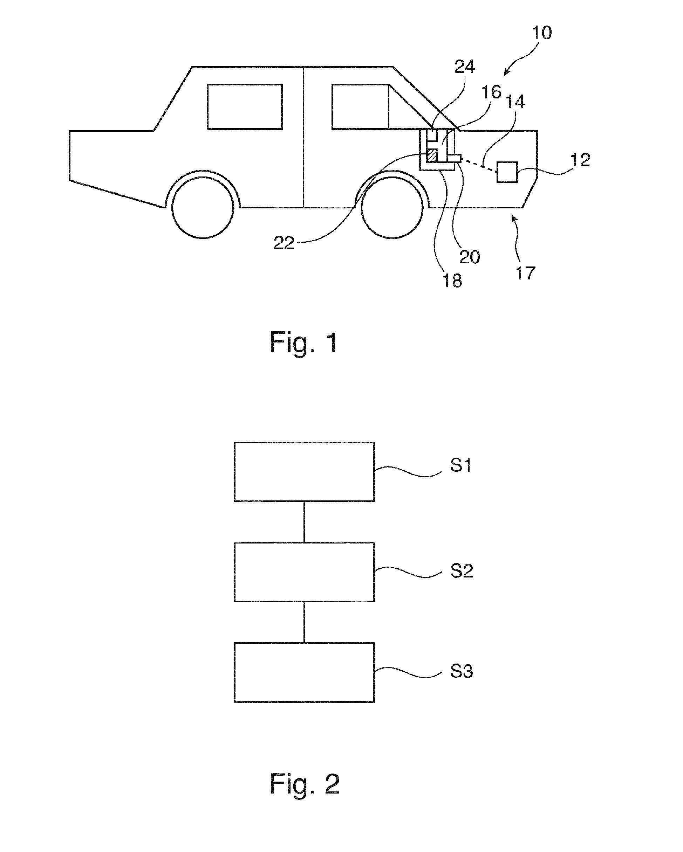

Fig. 1 schematically shows a vehicle 10 with a control device 12, a packet switched bus 14 and a display device 16.

The control device 12 may for instance be mounted in an engine compartment 17 or middle console of the vehicle 10. The packet switched bus 14 may for example be a CAN bus, which connects the control device 10 with the separate display device 16.

The display device 16 may be mounted to a console 18 of the vehicle 10, such as e.g. a dashboard of the vehicle 10. Therein the display device 16 may comprises a plug 20 for interconnecting the display device 16 to the packet switched bus 14. The display device 16 may thus be detachable from the console 18 by unplugging the plug 20 and/or removing the display device 16 from the console 18.

The control device 12 is adapted to transmit graphics data via the packet switched bus 14 to a display buffer 22 of the display device 16 as described in the foregoing and the following description in order to display certain information on a display 24 of the display device 16 and to bring this information to an attention of a driver of the vehicle 10. An information displayed on the display 24 may for example be a filling level of fuel in the vehicle 10.

Fig. 2 shows a flow chart schematically illustrating steps of a method for operating the control device 12 with the display device 16 of Fig. 1.

In a step S1 an initialization sequence for the control device 12 and the display device 16 may be initiated, wherein the display device 16 may optionally transmit a value indicating a support for an extended initialization sequence, in which the control device 12 may start with sending confirmations instead of messages to the display device 16.

During the startup process the display device 16 may for instance transmit a command and/or a message to the display device 16, such as for example registering an index. In turn the display device 16 may transmit a signal to the control device 12, which may indicate a certain status of the display device 16.

In case a communication problem between the control device 12 and the display device 16 may occur, a cyclic transmission of the last status of the display device 16 may trigger a retransmission of the last message by the control device 12.

In a step S2 of the startup process, a value for a graphics format indicating a number of bits used per pixel, and/or a value for a number of frames per second to be displayed on the display 24 may be sent by the control device 12 to the display device 16. The display device 16 may respond with a status message upon successfully receiving said values.

Apart from that, a signal for an absolute gray value, in which images are to be shown on the display 24, such as e.g. black, dark gray, light gray, or white, may be transmitted to the display device 16, and the display device 16 may again respond with a status message upon successfully receiving said value.

In a step S3 the display device 16 may transmit a signal indicating a termination of the initialization sequence to the control device 12, thereby terminating a cyclic transmission of status signals. The control device 12 may note and monitor completion of the initialization sequence of the display device 16.

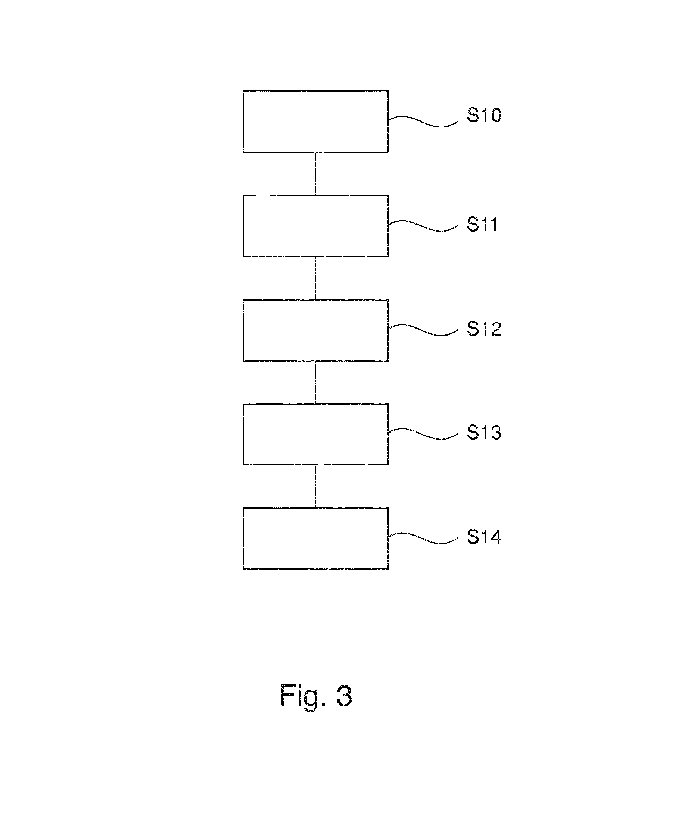

Fig. 3 shows a flow chart schematically illustrating steps of a method for operating the control device 12 with the display device 16 of Fig. 1.

In a first step S10 a value for a graphics format for a graphics data to be displayed and a value for the frames per second to be displayed on the display 24 may be transmitted from the control device 12 to the display device 16 via a packet switched CAN bus 14. The value for the graphics format may for instance indicate a number of bits used per pixel on the display 24 of the display device 16. Said values may be stored in a specific memory of the display device 16 or in the display buffer 22.

In a step S11 a next display image may be generated in the control device 12 and changed regions in the next display image with respect to an actual display image may be determined. For this purpose, rectangular regions may be determined, in which a content of the next display image has changed, and these rectangular regions may be separated or extracted from the next display image.

Moreover, a number of rectangular regions as well as a value for an offset, a width, and a height of each rectangular region may be determined by the control device 12, transmitted to and stored by the display device 16, for instance in the display buffer 22.

In case the next display image has entirely changed with respect to the currently displayed image, the display device 16 may be made aware of this by setting the number of rectangular regions to a specific value.

In worst case exactly one big rectangular region covering the entire screen may be transmitted.

Additionally, a checksum for the next display image, such as e.g. a CRC16 checksum, may be calculated by the control device 12, transmitted to and stored by the display device 16, for instance in the display buffer 22.

In a step S12 either the entire next display image, if the entire next image has changed with respect to the currently displayed image, or only the changed rectangular regions of the next image are partitioned into data packages and transmitted from the control device 12 to the display device 16 via the CAN bus 14. The data packages may subsequently be assembled in the display device 16 in order to obtain coherent graphics data.

In a step S13 the entire display buffer 22 is updated, if the entire next image has changed with respect to the currently displayed image. If only certain rectangular regions have changed, for each rectangular region a corresponding position in the display buffer 22 may be located by the display device 16, and the current graphics data contained within each changed rectangular region may be replaced bit by bit with the respective new graphics data. Other graphics data in the display buffer 22 may not be touched. The position of each rectangular region may be located by the display device 16 based on the values for the offset, the height and the width of each changed rectangular region, which were transmitted to the display device 16 in step S11. The position may thus e.g. be given as a pair of coordinates, such as (X,Y) coordinates, in a coordinate system of the display 24.

Apart from that it may be checked whether all graphics data required for a frame size of the display image and/or whether all rectangles have been transmitted and received by the display device 16.

In order to ensure a correct transmission, a checksum, such as e.g. a CRC16 checksum, may be calculated by the display device 16 for the graphics data contained in the display buffer 22, and it may be checked if this calculated checksum equals the checksum transmitted by the control device 12 in step S11.

In a step S14 the entire display buffer 22 is transmitted, e.g. via a serial peripheral interface, to a display driver of the display device 16, and the data are displayed on the display 24.

Optionally, if the graphics data are the first transmitted data after starting the display device 16, a trigger signal may be provided to the display driver in order to turn on the display 24 and/or its illumination.

After a successful transmission of graphics data from the control device 12 to the display device 16 via the CAN bus 14, as well as a successful transmission of the graphics data to the display driver via the serial peripheral interface, a message for requesting a new graphics frame, i.e. a message for requesting a new graphics data, may be sent to the control device 12. This message may serve as a trigger for the control device 12 to send new graphics data.

In all other cases, such as e.g. mismatch of the checksums, which may for instance be due to incorrect transmission of a rectangular changed region, an error code may be sent to the control device 12. The error code may in turn serve as indicator for the control device 12 that it has to send a complete graphics frame, i.e. that the display buffer 22 needs to be updated with an entire display image.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for operating a control device (12) with a separated display device (14) of a vehicle (10), the method comprising:
generating graphics data in the control device (12);
partitioning the graphics data into data packages;
transmitting the data packages from the control device (12) to the display device 16 via a packet switched bus (14);
assembling the data packages in the display device (16) into the graphics data;
updating a display buffer (22) of the display device (16) by replacing at least a part of the display buffer (22) with the graphics data.

2. The method according claim 1,
wherein the packet switched bus (14) is a CAN bus, a MOST bus, a FlexRay bus or an Ethernet bus.

3. The method of claim 1 or 2, further comprising:
in the control device (12), determining and generating at least one changed region in a next display image with respect to a actual display image;
transmitting the changed region as graphics data in packages to the display device (16);
replacing the changed region in the display buffer (22) of the display device (16).

4. The method of claim 3,
wherein more than one changed regions are transmitted to the display device (16), before the changed regions are replaced in display buffer (22).

5. The method of claim 3 or 4,
wherein the changed regions are rectangular regions and the method comprises:
transmitting an offset, a width and a height of the rectangular region to the display device (16).

6. The method of one of the preceding claims, further comprising:
transmitting a graphics format for the graphics data to the display device (16), the graphics format indicating the numbers of bits used per pixel.

7. The method according to one of the preceding claims,
wherein the graphics data is generated in a storage format of the display buffer (22);
wherein data packages are generated by partitioning the graphics data in the storage format without further processing;
wherein the assembled graphics data is directly written in the display buffer (22) without further processing.

8. The method according to one of the preceding claims,
wherein the display device (16) is detachable from a console (18) of the vehicle (10) and the display device (16) comprises a plug (20) for interconnecting the display device (16) to the packet switched bus (14).

9. A computer program for operating a control device (12) of a vehicle (10), which, when being executed by a processor, is adapted to carry out the method of one claims 1 to 8.

10. A computer-readable medium, in which a computer program according to claim 8 is stored.

11. A vehicle (10) with a control device (12), a packet switched bus (14) and a display device (16), which are adapted to carry out the method according to one of claims 1 to 8.
